# EUROPEAN PATENT SPECIFICATION

(11) **EP 2 642 794 B1**
(45) Date of publication and mention of the grant of the patent: **22.11.2017**
(21) Application number: 13160518.0
(22) Date of filing: 21.03.2013
(51) Int. Cl.: H04W 48/06, H04W 76/00, H04W 28/02

(54) **Base station, wireless end device, and transmission barring methods thereof**
Basisstation, drahtlose Endvorrichtung und Übertragungssperrverfahren davon
Station de base, dispositif terminal sans fil et leurs procédés d'interdiction de transmission

(30) Priority: 24.03.2012 US 201261615213 P
(43) Date of publication of application: 25.09.2013
(73) Proprietor: Institute for Information Industry, Taipei (TW)
(72) Inventor: Chen, Chiu-Wen, Taipei City (TW); Hsu, Chun-Yen, Chiayi County (TW)
(74) Representative: Michalski Hüttermann & Partner Patentanwälte mbB

(56) References cited:
- US-A1- 2011 270 984
- US-A1- 2012 039 171
- SHARP: "Issues with MTC use of Access Class Barring", 3GPP DRAFT; R2-102973, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Montreal, Canada; 20100510, 3 May 2010 (2010-05-03), XP050423076, [retrieved on 2010-05-03]
- RAHUL VAIDYA ET AL: "Network congestion control: mechanisms for congestion avoidance and recovery", ACWR '11 PROCEEDINGS OF THE 1ST INTERNATIONAL CONFERENCE ON WIRELESS TECHNOLOGIES FOR HUMANITARIAN RELIEF, 1 November 2011 (2011-11-01), pages 199-207, XP055078319, US DOI: 10.1145/2185216.2185276 ISBN: 978-1-4503-1011-6

## Description

### BACKGROUND OF THE INVENTION

### Field of the Invention

The present invention relates to a base station, a wireless end device, and transmission barring methods thereof; more particularly, the present invention relates to a base station, a wireless end device, and transmission barring methods thereof for dealing with data transmissions when a special event (i.e. a event that may cause a huge amount of data transmission) happens or is going to happen.

### Descriptions of the Related Art

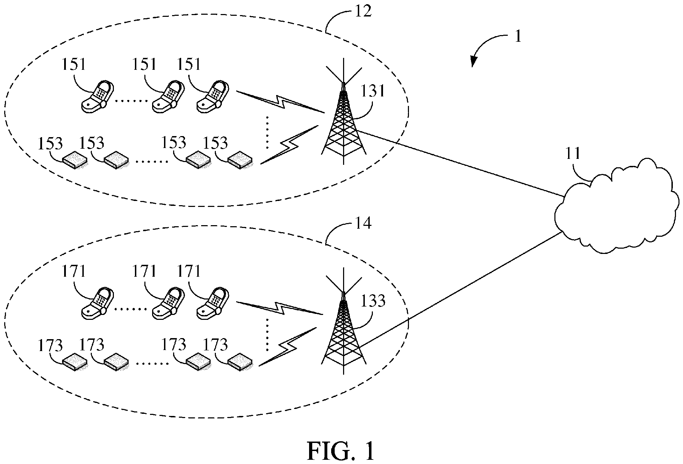

A conventional wireless communication network **1** is illustrated in **FIG. 1****,** which comprises a core network **11,** two base stations **131, 133,** and a plurality of wireless end devices **151, 153, 171, 173.** The wireless communication network **1** may conform to Long Term Evolution (LTE) standard, Worldwide Interoperability for Microwave Access (WiMAX) standard, or other wireless communication standard that is familiar to people ordinary skilled in the art.

The base stations **131, 133** are electrically connected to the core network **11.** The wireless end devices **151, 153** are in the coverage **12** of the base station **131,** while the wireless end devices **171, 173** are in the coverage **14** of the base station **133.** Among the wireless end devices **151, 153, 171, 173,** the wireless end devices **151, 171** are user equipments (e.g. mobile phones) and the wireless end devices **153, 173** are delay tolerant devices (e.g. smart meters) that simply periodically transmit collected data to the core network **11** via the base stations **131, 133.**

When an emergency event (e.g. a disaster like earthquake and tsunami) happens, huge amount of uplink data (e.g. emergency calls and/or emergency text messages from the wireless end devices **151, 171** to other wireless end devices via the base stations **131, 133,** and the regularly collected data from the wireless end devices **153, 173** to the core network **11** via the base stations **131, 133**) are transmitted expectedly in the wireless communication network **1.**

Huge amount of uplink data transmissions usually causes the base stations **131, 133** and/or the core network **11** overload. Specifically, random access channel (RACH) processing resources at the base stations **131, 133** will be impacted, which may result in discard of the messages for attachments (e.g. scheduling information (e.g. Msg3 in the LTE standard) transmission failure). The consequence of which is that some of the wireless end devices **151, 153, 171, 173** may not be able to attach to the base stations **131, 133** and/or to make emergency calls.

Moreover, for the wireless end devices **151, 153, 171, 173** that have attached to the base stations **131, 133,** some of them may be in the idle mode. For the aforementioned kinds of wireless end devices **151, 153, 171, 173,** processing resources for idle-to-active signals and/or re-registering signals at the core network **11** will be impacted. For example, S1-AP message and/or non-access stratum (NAS) message may be discarded. The consequence of which is that some of the wireless end devices **151, 153, 171, 173** cannot turn into the active mode from the idle mode and/or re-register to the core network **11.**

In addition to the problem of overload, huge amount of uplink data transmissions may also cause intolerable transmission delays, packet loss, or even service un-availability (e.g. emergency and/or high-priority call drops).

US 2011/0270984 A1 discloses a method for determining whether a machine type communication (MTC) device can attach to a network when there is an emergency event. Briefly speaking, an MTC device receives a radio frame from a base station after a triggering event is detected. The radio frame includes a current access class of the base station. The MTC device determines whether it has access privileges to the base station and then decides whether to attempt to attach to the network when the MTC device has access privileges.

Another related prior art document is provided by Sharp, which is an article having the title "Issues with MTC use of Access Class Barring." This article is a 3rd Generation Partnership Project (3GPP) draft, R2-102973 and is published on May 3, 2010. Sharp deals with the issue of RACH congestion due to MTC devices requesting access to the network in a nearly simultaneously manner. Sharp suggests the use and/or extension of the Access Class Barring (ACB) scheme as a method to control MTC initial access to the network. Particularly, Sharp discusses three issues related to the use of ACB as a method to address signaling overload caused by MTC devices and propose RAN actions for each issue.

US 2012/0039171 A1 describes a method for controlling network congestion. When a potential overload of the network is detected, an access class for which to change overload control information is selected. The overload control information is adjusted for the selected access class. The adjusted overload control information is then transmitted.

Yet another related prior art document is "Network Congestion Control: Mechanisms for Congestion Avoidance and Recovery" provided by Rahul Vaidya et al., which is published on November 1, 2011. Rahul Vaidya et al. achieves congestion control by having dynamic priority for individual calls.

Although these related prior arts provide congestion control for emergency events, the performances are still not good enough. Consequently, for a special event (e.g. an emergency event, an event for new year's countdown, etc.) that may cause a huge amount of data transmission in a wireless communication network, a mechanism for managing data transmissions to prevent network from overloading is still in an urgent need.

### SUMMARY OF THE INVENTION

To solve the aforementioned problems, the present invention provides a base station, a wireless end device, and transmission barring methods thereof.

The base station of the present invention comprises a first transceiving interface, a processor, and a second transceiving interface, wherein the processor is electrically connected to the first and second transceiving interfaces. The first transceiving interface is configured to receive a special event notification message from a core network. The processor is configured to generate a barring message after the first transceiving interface receives the special event notification message. The second transceiving interface is configured to transmit the barring message to at least one wireless end device to suspend the wireless end device from transmitting data to the base station for a barring time interval. The base station is not overloaded when the barring message is generated and transmitted.

The wireless end device of the present invention comprises a transceiving interface and a processor, wherein the transceiving interface is electrically connected to the processor. The transceiving interface is configured to receive a barring message from a base station. The processor is configured to suspend the transceiving interface from transmitting data to the base station for a barring time interval. The base station is not overloaded when the barring message is received by the wireless end device.

The transmission barring method of the present invention is for use in a base station. The base station comprises a first transceiving interface, a second transceiving interface, and a processor. The transmission barring method comprises the following steps of: receiving a special event notification message from a core network by the first transceiving interface, generating a barring message by the processor after receiving the special event notification message, and transmitting the barring message to at least one wireless end device by the second transceiving interface to suspend the wireless end device from transmitting data to the base station for a barring time interval. The base station is not overloaded when the barring message is generated and transmitted.

The transmission barring method of the present invention is for use in a wireless end device. The wireless end device comprises a transceiving interface and a processor. The transmission barring method comprises the following steps of: receiving a barring message from a base station by the transceiving interface and suspending the transceiving interface from transmitting data to the base station for a barring time interval by the processor. The base station is not overloaded when the barring message is received by the wireless end device.

In the present invention, a special event notification message is generated by the core network when a special event (e.g. emergency event, an event for new year's countdown, etc.) that may cause a huge amount of data transmission happens or is going to happen. After the base station receives the special event notification message from the core network, the base station will generate a barring message and transmits the barring message to some wireless end devices (e.g. lower priority user equipments and/or delay tolerant devices) in order to bar their data transmissions. It is emphasized that the base station is not overloaded when the barring message is generated and transmitted. By the mechanisms provided by the present invention, the number of data flows toward a base station can be greatly reduced when the special event happens. As a result, the problems of overload, call drops, and intolerable transmission delays can be mitigated.

### BRIEF DESCRIPTION OF THE DRAWINGS

**FIG. 1** illustrates a schematic view of a conventional wireless communication network;
**FIG. 2A** illustrates a schematic view of a wireless communication network **2** of the first embodiment of the present invention;
**FIG. 2B** illustrates a block diagram of the base station **231** and a block diagram of the wireless end device **253**;
**FIG. 3** illustrates the data flows of the second embodiment of the present invention;
**FIG. 4** illustrates the data flows of the third embodiment of the present invention;
**FIG. 5** illustrates the data flows of the fourth embodiment of the present invention;
**FIG. 6** illustrates the data flows of the fifth embodiment of the present invention;
**FIG. 7** illustrates the data flows of the sixth embodiment of the present invention;
**FIG. 8** illustrates the flowchart of the seventh embodiment of the present invention;
**FIG. 9** illustrates the flowchart of the eighth embodiment of the present invention;
**FIG. 10** illustrates the flowchart of the ninth embodiment of the present invention;
**FIG. 11** illustrates the flowchart of the tenth embodiment of the present invention;
**FIG. 12** illustrates the flowchart of the eleventh embodiment of the present invention; and
**FIG. 13** illustrates the flowchart of the twelfth embodiment of the present invention.

### DESCRIPTION OF THE PREFERRED EMBODIMENT

In the following description, the present invention will be explained with reference to embodiments thereof. However, these embodiments are not intended to limit the present invention to any specific environment, applications, or particular implementations described in these embodiments. Therefore, description of these embodiments is only for purpose of illustration rather than to limit the present invention. It should be appreciated that, in the following embodiments and the attached drawings, elements unrelated to the present invention are omitted from depiction.

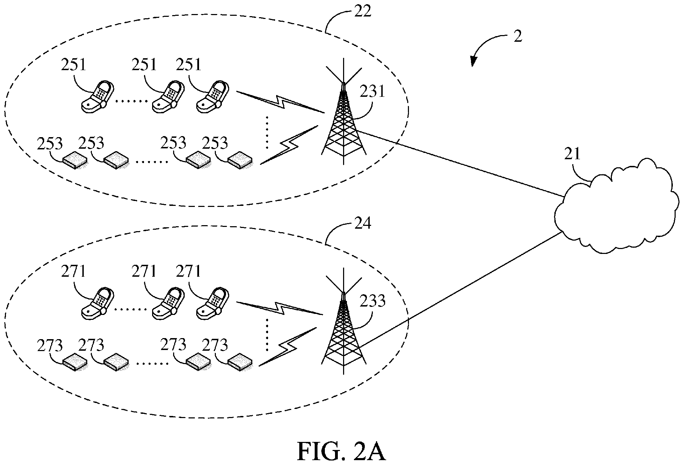

A first embodiment of the present invention is a wireless communication network **2,** which is illustrated in **FIG. 2A****.** The wireless communication network **2** may conform to the LTE standard, WiMAX standard, or other wireless communication standard that is well-known to people ordinary skilled in the art. The wireless communication network **2** comprises a core network **21,** two base stations **231, 233,** and a plurality of wireless end devices **251, 253, 271, 273.** It should be noted that the present invention does not limit the number of the base stations and the number of the wireless end devices in a wireless communication network.

The core network **21** may comprise a plurality of entities for providing communication services. For example, the core network **21** may comprise a mobility management entity, a serving gateway, and a packet data network gateway when the wireless communication network **2** conforms to the LTE standard. It should be noted that the present invention does not limit the number and the types of the entities comprised in the core network.

The base stations **231, 233** are electrically connected to the core network **21.** The wireless end devices **251, 253** are in the coverage **22** of the base station **231,** while the wireless end devices **271, 273** are in the coverage **24** of the base station **233.** Among the wireless end devices **251, 253, 271, 273,** the wireless end devices **251, 271** have higher priority for transmissions; that is, the wireless end devices **251, 271** may be delay intolerant devices (e.g. user equipments) whose phone calls and/or data transmissions are preferred not to be delayed. On the contrary, the wireless end devices **253, 273** have lower priority for transmissions and whose phone calls and/or data transmissions being delayed causes no harm. For example, the wireless end devices **253, 273** may be delay tolerant devices (e.g. smart meters) that simply periodically transmit collected data to the core network **21** via the base stations **231, 233** or may be user equipments that have lower priorities for transmission.

From the viewpoint of the present invention, the functionalities and operations of the base stations **231, 233** are the same, the functionalities and operations of the wireless end devices **251, 271** are the same, and the functionalities and operations of the wireless end devices **253, 273** are the same, so the following descriptions will focus on the base station **231,** one of the wireless end devices **251,** one of the wireless end devices **253,** and the core network **21.**

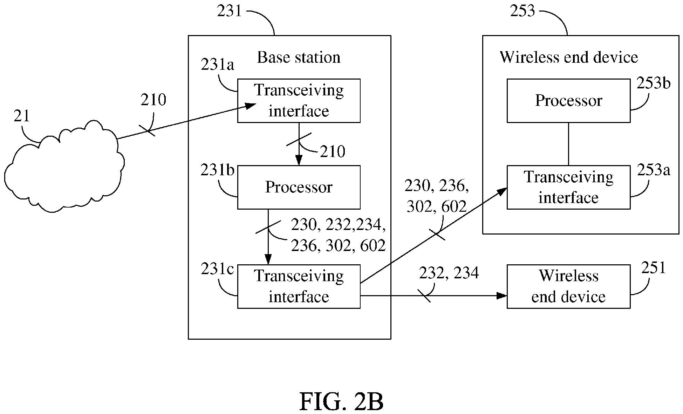

**FIG. 2B** illustrates a block diagram of the base station **231** and a block diagram of the wireless end device **253.** The base station **231** comprises two transceiving interfaces **231a, 231c** and a processor **231b,** wherein the processor **231b** is electrically connected to the transceiving interfaces **231a, 231c.** The wireless end device **253** comprises a transceiving interface **253a** and a processor **253b,** wherein the transceiving interface **253a** is electrically connected to the processor **253b.** Each of the transceiving interfaces **231a, 231c, 253a** may be any one of various transceiving interfaces that are well known to those of ordinary skill in the art. Each of the processors **231b, 253b** may be any one of various processors, central processing units, microprocessors, or other calculating apparatuses that are well known to those of ordinary skill in the art.

When a special event (i.e. an event that may cause a huge amount of data transmission such as an emergency event, an event for new year's countdown, etc.) happens or is going to happen in a short time, a special event notification message **210** is generated by the core network **21** and then received by the transceiving interface **231a** of the base station **231.** It is noted that when the special event is an emergency event, the special event notification message **210** is an emergency event notification message.

After receiving the special event notification message **210,** the base station **231** treats the wireless end devices **251, 253** differently. The wireless end device **253** has lower priority for transmissions, so whose data transmissions will be suspended by the base station **231.** On the contrary, the wireless end device **251** has higher priority for transmissions, so whose data transmissions (especially data transmission related to the emergency event) will not be suspended by the base station **231.**

To be more specific, after the base station **231** receives the special event notification message **210** for a short time period (e.g. immediately after receiving the special event notification message **210**), the processor **231b** generates a barring message **230** and an emergency alert indicator **232.** The transceiving interface **231c** then transmits the barring message **230** and the emergency alert indicator **232** to the wireless end device **253** and the wireless end device **251** respectively. It is noted that the base station **231** is not overloaded when the barring message **230** is generated and transmitted.

The barring message **230** is used to suspend the wireless end device **253** from transmitting data to the base station **231** for a barring time interval (not shown). The barring time interval may be a predetermined one or recorded in the barring message **230.** From the viewpoint of the wireless end device **253,** the transceiving interface **253a** receives the barring message **230** from the base station **231.** Similarly, it is noted that the base station **231** is not overloaded when the barring message **230** is received by the wireless end device **253.** After receiving the barring message **230,** the processor **253b** suspends the transceiving interface **253a** from transmitting data to the base station **231** for the barring time interval.

As to the emergency alert indicator **232,** it is used to enable the wireless end device **251** into an active mode so that the wireless end device **251** can receive emergency related information **234** from the base station **231.** Thereafter, the wireless end device **251** can request the base station **231** for making an emergency call and/or transmit data (especially data transmission related to the emergency event) to the base station **231.**

If the special event is still happening after a short period of time, the base station **231** may transmit another barring message **236** to the wireless end device **253.** After the transceiving interface **253a** receives the barring message **236,** the processor **253b** updates the barring time interval and continues to suspend the transceiving interface **253a** for the updated bar time interval. On the contrary, if the special event ends, the transceiving interface **253a** can perform data transmission again due to the bar time interval has expired.

For other more complicated embodiments, priorities for transmission may be defined into more than two levels. Each of the wireless end devices **251, 253** is assigned to one of the levels of the priorities. The base station **231** has to inform the wireless end devices **251, 253** of the level(s) of the priority to be barred by sending a barring identity(s). The barring identity(s) may be recorded in the barring message **230** or in another barring message. When the transceiving interface **253a** of the wireless end device **253** receives the barring identity, the processor **253b** checks whether the barring identity is the same as the level that the wireless end device **253** is assigned to. When the barring identity is the same as the priority that the wireless end device **253** is assigned to, the processor **253b** then suspends the transceiving interface **253a** from transmitting data to the base station **231** for the barring time interval.

According to the above descriptions, the wireless end devices **251, 253** have different priorities for transmissions when a special event happens. For the wireless end devices **251** (i.e. the ones that have higher priority for transmission), their data transmissions and phone calls will not be suspended during the special event. On the contrary, for the wireless end devices **253** (i.e. the ones that have lower priority for transmission), data transmissions and phone calls will be suspended for the barring time interval. Since the wireless end devices **253** within the coverage **22** of the base station **231** have been suspended from data transmission before the huge amount of data transmission in the wireless communication network **2** really occurs, the number of data flows toward the base station **231** can be reduced. As a result, the problems of overload, call drops, and intolerable transmission delays can be mitigated.

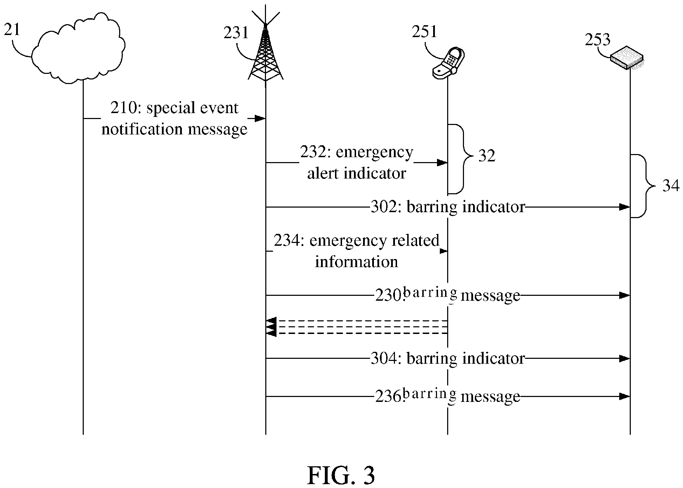

Please refer to **FIG. 2A****,** **FIG. 2B****,** and **FIG. 3** for a second embodiment of the present invention. Similar to the first embodiment, the special event notification message **210** is generated by the core network **21** and then received by the transceiving interface **231a** of the base station **231** when a special event happens or is going to happen in a short time.

In this embodiment, the processor **231b** of the base station **231** generates a barring indicator **302** and the emergency alert indicator **232** after the transceiving interface **231a** receives the special event notification message **210.** Then, the transceiving interface **231c** transmits the barring indicator **302** to the wireless end device **253** within a paging cycle **34** of the wireless end device **253** and transmits the emergency alert indicator **232** to the wireless end device **251** within a paging cycle **32** of the wireless end device **251.** It is noted that the base station **231** is not overloaded when the barring indicator **302** is generated and transmitted.

It should be noted that, in some embodiments, the barring indicator **302** may be recorded in a paging message for the wireless end device **253** and the emergency alert indicator **232** may be recorded in a paging message for the wireless end device **251.** Yet in some other embodiments, the barring indicator **302** and the emergency alert indicator **232** may be recorded in the same paging message. For the embodiments that the barring indicator **302** and the emergency alert indicator **232** are recorded in a paging message (or paging messages), each of the barring indicator **302** and the emergency alert indicator **232** may be of one bit.

After receiving the emergency alert indicator **232** in its paging cycle **32,** the wireless end device **251** becomes active and receives emergency related information **234** recorded in a system information message from the base station **231.** Thereafter, the wireless end device **251** can request the base station **231** for making an emergency call and/or transmit data to the base station **231,** which is illustrated by the dashed arrows in **FIG. 3****.**

As to the wireless end device **253,** the transceiving interface **253a** receives the barring indicator **302** in its paging cycle **34.** It is noted that the base station **231** is not overloaded when the barring indicator **302** is received by the wireless end device **253.** Particularly, when the barring indicator **302** is recorded in a paging message for the wireless end device **253,** the transceiving interface **253a** receives the barring indicator **302** by receiving the paging message. Then, the transceiving interface **253a** receives the barring message **230** recorded in a system information message from the base station **231.** It is noted that the base station **231** is not overloaded when the barring message **230** is generated, transmitted, and received. In addition, the base station **231** transmits the barring message **230** by broadcasting or multicasting. In this embodiment, the barring message **230** records the barring time interval and the processor **253b** suspends the transceiving interface **253a** from transmitting data to the base station **231** for the barring time interval learned from the barring message **230.**

If the special event continues after a short period of time, the base station **231** transmits another barring message **236** to the wireless end device **253.** After the transceiving interface **253a** receives the barring message **236,** the processor **253b** updates the barring time interval according to the barring time interval recorded in the barring message **236** and continues to suspend the transceiving interface **253a** for the updated barring time interval. It is noted that the base station **231** may transmit an additional barring indicator **304** prior to transmitting the barring message **236,** which is used to enable other wireless end device(s) **253** from the idle mode into the active mode.

Briefly speaking, the base station **231** simply uses the barring indicator **302** to inform the wireless end device **253** of the activation of the barring mechanism. Upon receiving the barring indicator **302,** the wireless end device **253** learns that it has to receive another barring message (i.e. the barring message **230**) for the detailed barring information (e.g. barring time interval, barring identity, etc.). Afterwards, the wireless end device **253** is suspended for transmitting data to the base station **231.**

In addition to the aforesaid operations, the second embodiment can execute all the operations set forth for the first embodiment. How the second embodiment executes these operations will be readily appreciated by those of ordinary skill in the art based on the explanation of the first embodiment and thus will not be further described therein.

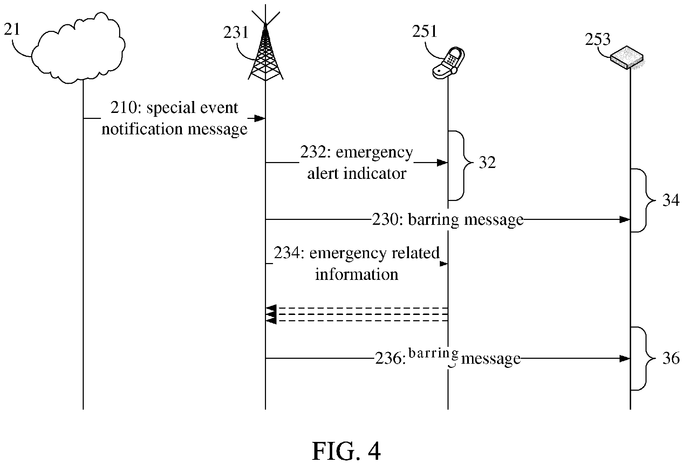

Please refer to **FIG. 2A****,** **FIG. 2B****,** and **FIG. 4** for a third embodiment of the present invention. Similar to the first embodiment, the special event notification message **210** is generated by the core network **21** and then received by the transceiving interface **231a** of the base station **231** when a special event happens or is going to happen in a short time.

After the transceiving interface **231a** receives the special event notification message **210,** the processor **231b** generates the barring message **230** and the emergency alert indicator **232.** Then, the transceiving interface **231c** transmits the barring message **230** to the wireless end device **253** within the paging cycle **34** of the wireless end device **253** and transmits the emergency alert indicator **232** to the wireless end device **251** within the paging cycle **32** of the wireless end device **251.** The base station **231** is not overloaded when the barring message **230** is generated and transmitted. It should be noted that, in some embodiments, the barring message **230** may be recorded in a paging message for the wireless end device **253** and the emergency alert indicator **232** may be recorded in a paging message for the wireless end device **251.** Yet in some other embodiments, the barring message **230** and the emergency alert indicator **232** may be recorded in the same paging message. For those embodiments, each of the barring message **230** and the emergency alert indicator **232** may be of one bit.

After receiving the emergency alert indicator **232** in its paging cycle **32,** the wireless end device **251** becomes active and receives emergency related information **234** in system information message from the base station **231.** Thereafter, the wireless end device **251** can request the base station **231** for making an emergency call and/or transmit data to the base station **231,** which is illustrated by the dashed arrows in **FIG. 4****.**

As to the wireless end device **253,** the transceiving interface **253a** receives the barring message **230** in its paging cycle **34.** Particularly, when the barring message **230** is recorded in a paging message for the wireless end device **253,** the transceiving interface **253a** receives the barring message **230** by receiving the paging message. The base station **231** is not overloaded when the barring message **230** is received by the wireless end device **253.** Then, the processor **253b** suspends the transceiving interface **253a** from transmitting data to the base station **231** for a barring time interval. It is noted that the barring time interval is a predetermined one.

If the special event continues after a short period of time, the base station **231** transmits another barring message **236** within another paging cycle **36** of the wireless end device **253.** After the transceiving interface **253a** receives the barring message **236** in the paging cycle **36,** the processor **253b** suspends the transceiving interface **253a** from transmitting data to the base station **231** for the predetermined barring time interval again.

Briefly speaking, the base station **231** simply uses the barring message **230** to inform the wireless end device **253** of the barring information. Upon receiving the barring message **230,** the wireless end device **253** learns that it has to be suspended for transmitting data to the base station **231** for the predetermined barring time interval.

In addition to the aforesaid operations, the third embodiment can execute all the operations set forth for the first embodiment. How the third embodiment executes these operations will be readily appreciated by those of ordinary skill in the art based on the explanation of the first embodiment and thus will not be further described therein.

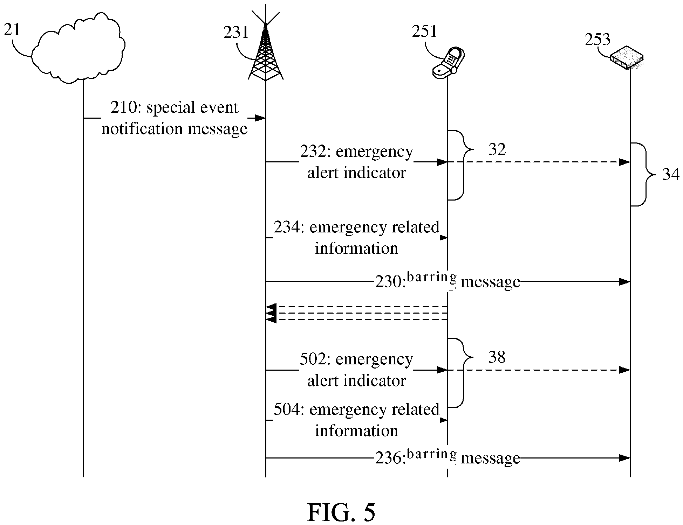

Please refer to **FIG. 2A****,** **FIG. 2B****,** and **FIG. 5** for a fourth embodiment of the present invention. Similar to the first to third embodiments, the special event notification message **210** is generated by the core network **21** and then received by the transceiving interface **231a** of the base station **231** when a special event happens or is going to happen in a short time.

After the transceiving interface **231a** receives the special event notification message **210,** the processor **231b** generates the emergency alert indicator **232.** Then, the transceiving interface **231c** transmits the emergency alert indicator **232** to the wireless end device **251** within the paging cycle **32** of the wireless end device **251.** It should be noted that, in some embodiments, the emergency alert indicator **232** may be recorded in a paging message for the wireless end device **251** and may be of one bit.

After receiving the emergency alert indicator **232** in its paging cycle **32,** the wireless end device **251** becomes active and receives emergency related information **234** recorded in a system information message from the base station **231.** Thereafter, the wireless end device **251** can request the base station **231** for making an emergency call and/or transmit data to the base station **231,** which is illustrated by the dashed arrows in **FIG. 5****.**

As to the wireless end device **253,** its paging cycle **34** and the paging cycle **32** of the wireless end device **251** overlap, so the transceiving interface **253a** can listen for emergency alert indicator within the paging cycle **34.** After the transceiving interface **253a** listens to the emergency alert indicator **232** within the paging cycle **34,** the processor **253b** enables the transceiving interface **253a** into an active mode. Then, the transceiving interface **253a** receives the barring message **230** recorded in a system information message from the base station **231.** The barring message **230** is transmitted from the base station **231** by broadcasting or multicasting. The barring message **230** records the barring time interval and the processor **253b** then suspends the transceiving interface **253a** from transmitting data to the base station **231** for the barring time interval learned from the barring message **230.** It is noted that the base station **231** is not overloaded when the barring message **230** is generated, transmitted, and received.

It should be emphasized that the present invention does not limit the transmission sequence of the emergency related information **234** and the barring message **230.** That is, after transmitting the emergency alert indicator **232,** the base station **231** may transmit the emergency related information **234** and the barring message **230** in any sequence.

If the special event continues after a short period of time, the base station **231** transmits another barring message **236** to the wireless end device **253.** After the transceiving interface **253a** receives the barring message **236,** the processor **253b** updates the barring time interval according to the barring time interval recorded in the barring message **236** and continues to suspend the transceiving interface **253a** for the updated barring time interval. It is noted that, prior to transmitting the barring message **236,** the base station **231** may transmit an additional emergency alert indicator **502** within another paging cycle **38** and another emergency related information **504** to other wireless end device(s) **251.**

Likewise, it should be emphasized that the present invention does not limit the transmission sequence of the emergency related information **504** and the barring message **236.** That is, after transmitting the emergency alert indicator **502,** the base station **231** may transmit the emergency related information **504** and the barring message **236** in any sequence.

Briefly speaking, the wireless end device **253** listens for an emergency alert indicator **232** that is transmitted to the wireless end device **251.** Upon listening to the emergency alert indicator **232,** the wireless end device **253** learns that it has to receive a barring message (i.e. the barring message **230**) for the detailed barring information (e.g. barring time interval, barring identity, etc.). Afterwards, the wireless end device **253** is suspended for transmitting data to the base station **231.**

In addition to the aforesaid operations, the fourth embodiment can execute all the operations set forth for the first embodiment. How the fourth embodiment executes these operations will be readily appreciated by those of ordinary skill in the art based on the explanation of the first embodiment and thus will not be further described therein.

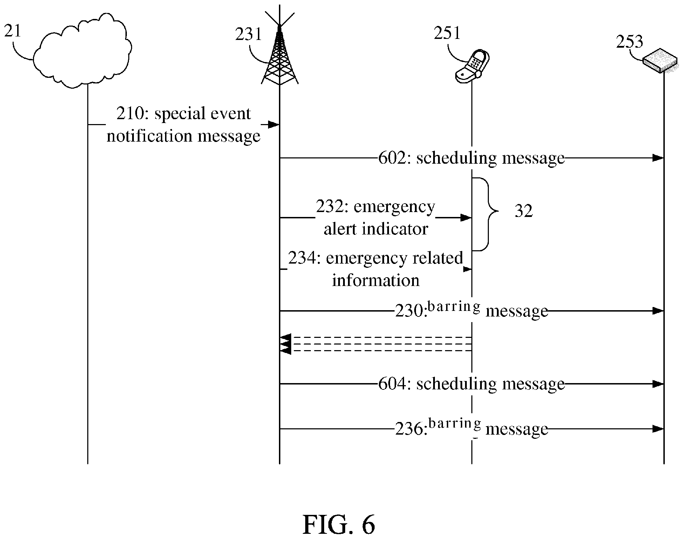

Please refer to **FIG. 2A****,****FIG. 2B****,** and **FIG. 6** for a fifth embodiment of the present invention. Similar to the first to fourth embodiments, the special event notification message **210** is generated by the core network **21** and then received by the transceiving interface **231a** of the base station **231** when a special event happens or is going to happen in a short time.

In this embodiment, the processor **231b** of the base station **231** generates a scheduling message **602** of a plurality of system information blocks after the transceiving interface **231a** receives the special event notification message **210.** Then, the transceiving interface **231c** broadcasts the scheduling message **602** during a system information transmission interval. From the viewpoint of the wireless end device **253,** its transceiving interface **253a** receives the scheduling message **602** and learns the arrangement of the system information blocks. Next, the transceiving interface **253a** receives the barring message **230** recorded in at least one of the system information blocks according to the arrangement indicated by the scheduling message **602.** The barring message **230** records the barring time interval and the processor **253b** suspends the transceiving interface **253a** from transmitting data to the base station **231** for the barring time interval learned from the barring message **230.** It should be noted that the barring message **230** may be recorded in the scheduling message **602** in some other embodiments. In addition, it is emphasized that the base station **231** is not overloaded when the barring message **230** is generated, transmitted, and received.

In this embodiment, the processor **231b** also generates an emergency alert indicator **232** after the transceiving interface **231a** receives the special event notification message **210.** Then, the transceiving interface **231c** transmits the emergency alert indicator **232** to the wireless end device **251** within the paging cycle **32** of the wireless end device **251.** It should be noted that, in some embodiments, the emergency alert indicator **232** may be recorded in a paging message for the wireless end device **251.** For those embodiments, the emergency alert indicator **232** may be of one bit.

After receiving the emergency alert indicator **232** in its paging cycle **32,** the wireless end device **251** becomes active and receives emergency related information **234** recorded in a system information message from the base station **231,** wherein the system information message may be one of the aforementioned system information blocks. Thereafter, the wireless end device **251** can request the base station **231** for making an emergency call and/or transmit data to the base station **231,** which is illustrated by the dashed arrows in **FIG. 6****.**

It should be emphasized that the present invention does not limit the transmission sequence of the emergency related information **234** and the barring message **230;** that is, the time instant for transmitting the emergency related information **234** may be prior to, later to, or at the same as the time instant for transmitting the barring message **230.**

If the special event continues after a short period of time, the base station **231** transmits another scheduling message **604** of other system information blocks and another barring message **236** to the wireless end device **253.** After the transceiving interface **253a** receives the barring message **236,** the processor **253b** updates the barring time interval according to the barring time interval recorded in the barring message **236** and continues to suspend the transceiving interface **253a** for the updated barring time interval.

Briefly speaking, the base station **231** broadcasts the scheduling message **602** of the system information blocks. The wireless end device **253** learns that it has to receive the barring message **230** for the detailed barring information (e.g. barring time interval, barring identity, etc.) according to the scheduling message **602.** Afterwards, the wireless end device **253** is suspended for transmitting data to the base station **231.**

In addition to the aforesaid operations, the fifth embodiment can execute all the operations set forth for the first embodiment. How the fifth embodiment executes these operations will be readily appreciated by those of ordinary skill in the art based on the explanation of the first embodiment and thus will not be further described therein.

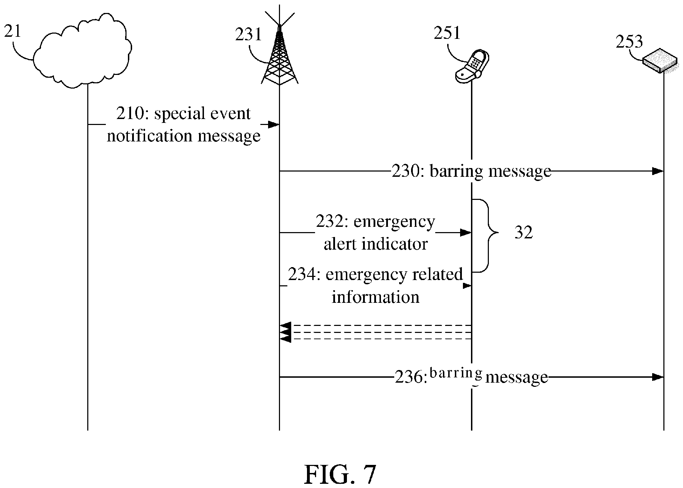

Please refer to **FIG. 2A****,** **FIG. 2B****,** and **FIG. 7** for a sixth embodiment of the present invention. Similar to the first to fifth embodiments, the special event notification message **210** is generated by the core network **21** and then received by the transceiving interface **231a** of the base station **231** when a special event happens or is going to happen in a short time.

After the transceiving interface **231a** receives the special event notification message **210,** the processor **231b** generates the emergency alert indicator **232.** Then, the transceiving interface **231c** transmits the emergency alert indicator **232** to the wireless end device **251** within the paging cycle **32** of the wireless end device **251.** It should be noted that, in some embodiments, the emergency alert indicator **232** may be recorded in a paging message for the wireless end device **251.** For those embodiments, the emergency alert indicator **232** may be of one bit.

After receiving the emergency alert indicator **232** in its paging cycle **32,** the wireless end device **251** becomes active and receives emergency related information **234** recorded in a system information message from the base station **231.** Thereafter, the wireless end device **251** can request the base station **231** for making an emergency call and/or transmit data to the base station **231,** which is illustrated by the dashed arrows in **FIG. 7****.**

The processor **231b** of the base station **231** also generates the barring message **230** and the transceiving interface **231c** then transmits the barring message **230** to the wireless end device **253** by broadcasting. The base station **231** is not overloaded when the barring message **230** is generated and transmitted. In some other embodiments, the barring message **230** may be recorded in a master information block or a system information block. When the barring message **230** is recorded in master information block, it may be of one bit.

From the viewpoint of the wireless end device **253,** its transceiving interface **253a** receives the barring message **230.** It is noted that the base station **231** is not overloaded when the barring message **230** is received by the wireless end device **253.** Then, the processor **253b** suspends the transceiving interface **253a** from transmitting data to the base station **231** for a barring time interval. It is noted that the barring time interval is a predetermined one.

If the special event continues after a short period of time, the base station **231** transmits another barring message **236** to the wireless end device **253** by broadcasting again. Likewise, the barring message **230** may be recorded in a master information block or a system information block. After the transceiving interface **253a** receives the barring message **236,** the processor **253b** suspends the transceiving interface **253a** from transmitting data to the base station **231** for the predetermined barring time interval again.

Briefly speaking, the base station **231** broadcasts the barring message **230** in a master information block or a system information block. Upon receiving the barring message **230,** the wireless end device **253** learns that it has to be suspended for transmitting data to the base station **231** for the predetermined barring time interval.

In addition to the aforesaid operations, the sixth embodiment can execute all the operations set forth for the first embodiment. How the sixth embodiment executes these operations will be readily appreciated by those of ordinary skill in the art based on the explanation of the first embodiment and thus will not be further described therein.

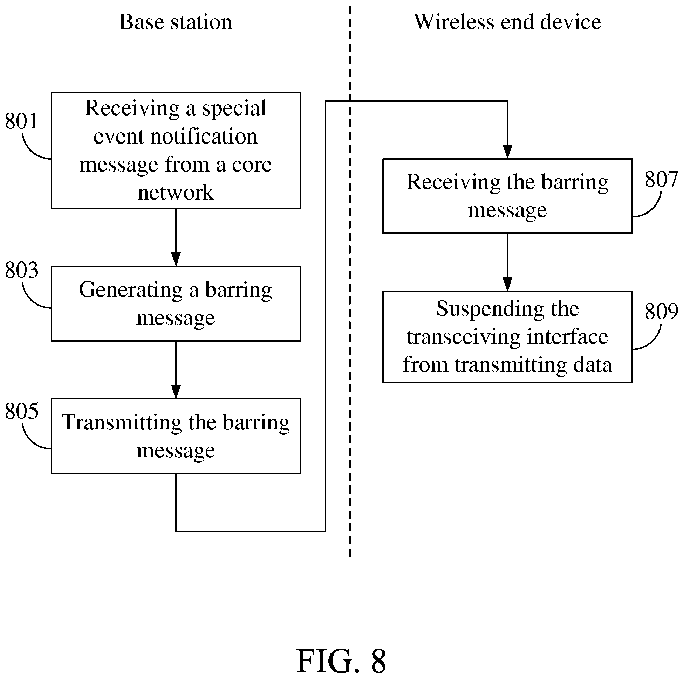

A seventh embodiment of the present invention is a transmission barring method, whose flowchart is illustrated in **FIG. 8****.** The transmission barring method can be used for a wireless communication network comprising a core network, a base station, and a wireless end device. The wireless end device has a lower priority for transmission in the wireless communication network. For example, the wireless end device may be a delay tolerant device. The base station comprises a first transceiving interface, a processor, and a second transceiving interface, while the wireless end device comprises a processor and a transceiving interface.

When a special event happens or is going to happen in a short time, the core network transmits a special event notification message. Afterwards, step **801** is executed by the first transceiving interface of the base station for receiving the special event notification message from the core network. Then, step **803** is executed by the processor of the base station for generating a barring message. Next, step **805** is executed by the second transceiving interface of the base station for transmitting the barring message to the wireless end device.

From the viewpoint of the wireless end device, step **807** is executed by the transceiving interface of the wireless end device for receiving the barring message. Next, step **809** is executed by the processor of the wireless end device for suspending the transceiving interface of the wireless end device from transmitting data to the base station for a barring time interval. It is noted that the barring time interval may be a predetermined one or may be recorded in the barring message. It is noted that the base station is not overloaded when the aforesaid steps **803, 805,** and **807** are executed.

In case that the special event continues, the transmission barring method repeats the aforementioned steps **803, 805, 807,** and **809** and the wireless end device will update the barring time interval accordingly.

It is noted that, in some embodiments, the barring message generated in step **803** may record an identity indicating which wireless end device to be suspended. In this way, the wireless end device has to execute another step after the step **807** to determine whether the identity recorded in the barring message is the same as the identity of the wireless end device. The wireless end device will execute step **809** only when the two identities are the same.

In addition to the aforesaid steps, the seventh embodiment can execute all the operations set forth for the first embodiment. How the seventh embodiment executes these operations will be readily appreciated by those of ordinary skill in the art based on the explanation of the first embodiment and thus will not be further described therein.

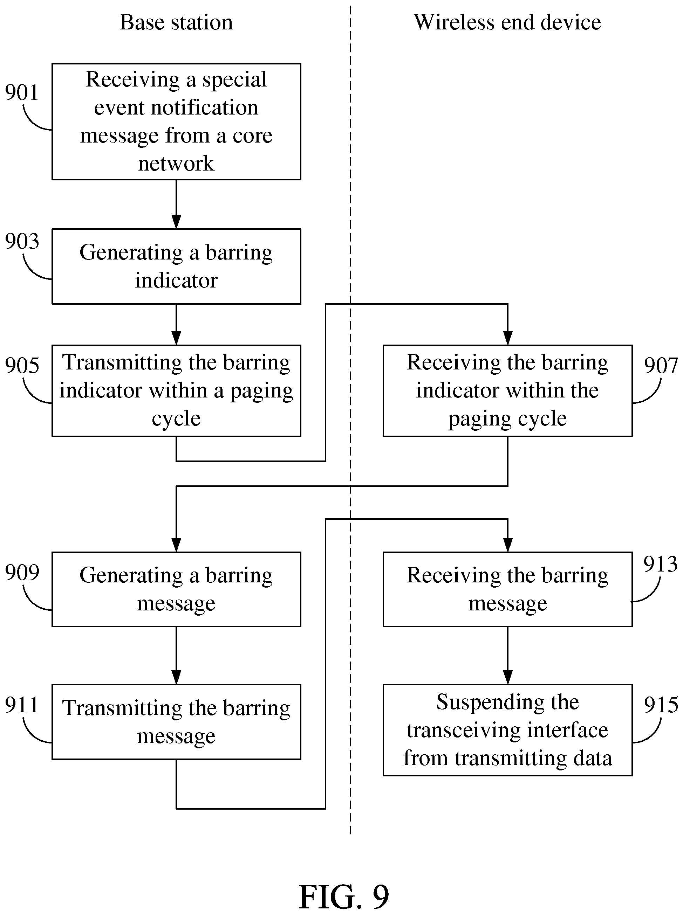

An eighth embodiment of the present invention is a transmission barring method, whose flowchart is illustrated in **FIG. 9****.** The transmission barring method can be used for a wireless communication network comprising a core network, a base station, and a wireless end device. The wireless end device has a lower priority for transmission in the wireless communication network. For example, the wireless end device may be a delay tolerant device. The base station comprises a first transceiving interface, a processor, and a second transceiving interface, while the wireless end device comprises a processor and a transceiving interface.

When a special event happens or is going to happen in a short time, the core network transmits a special event notification message. Afterwards, step **901** is executed by the first transceiving interface of the base station for receiving the special event notification message from the core network. Next, step **903** is executed by the processor of the base station for generating a barring indicator. Following that, step **905** is executed by the second transceiving interface of the base station for transmitting the barring indicator to the wireless end device within a paging cycle of the wireless end device. Next, step **907** is executed by the transceiving interface of the wireless end device to receive the barring indicator within its paging cycle.

It is noted that, in some embodiment, the barring indicator may be recorded in a paging message. Hence, step **905** transmits the barring indicator by transmitting the paging message, while step **907** receives the barring indicator by receiving the paging message.

Following that, step **909** is executed by the processor of the base station for generating a barring message. It is noted that the barring message generated in step **909** comprises additional barring information, such as the barring time interval, barring identity, etc. Step **911** is then executed by the second transceiving interface of the base station for transmitting the barring message to the wireless end device. Next, step **913** is executed by the transceiving interface of the wireless end device for receiving the barring message. Afterwards, the wireless end device derives the barring time interval and its processor executes step **915** for suspending its transceiving interface from transmitting data to the base station for the barring time interval. It is noted that the base station is not overloaded when the steps **903, 905, 907, 909, 911,** and **913** are executed.

In case that the special event continues, the transmission barring method repeats the aforementioned steps **909, 911, 913,** and **915** and the wireless end device will update the barring time interval accordingly.

In addition to the aforesaid steps, the eighth embodiment can execute all the operations set forth for the second embodiment. How the eighth embodiment executes these operations will be readily appreciated by those of ordinary skill in the art based on the explanation of the second embodiment and thus will not be further described therein.

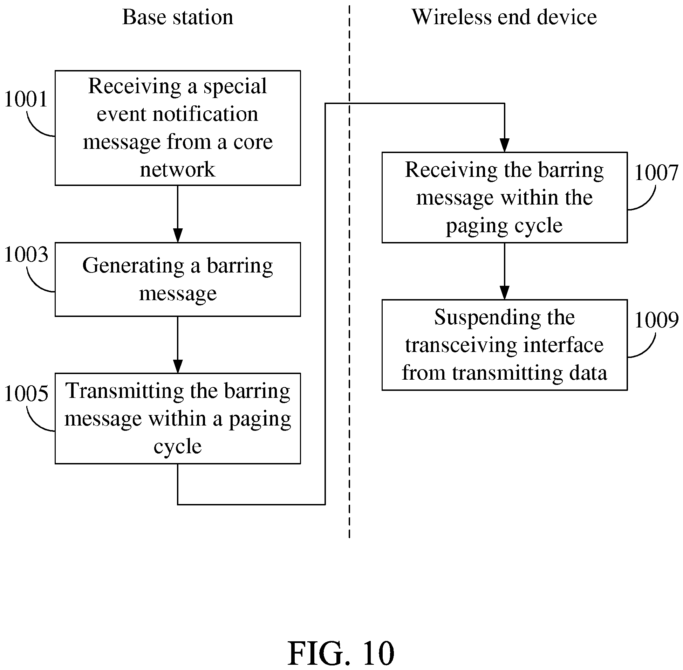

A ninth embodiment of the present invention is a transmission barring method, whose flowchart is illustrated in **FIG. 10****.** The transmission barring method can be used for a wireless communication network comprising a core network, a base station, and a wireless end device. The wireless end device has a lower priority for transmission in the wireless communication network. For example, the wireless end device may be a delay tolerant device. The base station comprises a first transceiving interface, a processor, and a second transceiving interface, while the wireless end device comprises a processor and a transceiving interface.

When a special event happens or is going to happen, the core network transmits a special event notification message. Afterwards, step **1001** is executed by the first transceiving interface of the base station for receiving the special event notification message from the core network. Then, step **1003** is executed by the processor of the base station for generating a barring message. Next, step **1005** is executed by the second transceiving interface of the base station for transmitting the barring message to the wireless end device within a paging cycle of the wireless end device.

From the viewpoint of the wireless end device, step **1007** is executed by the transceiving interface of the wireless end device for receiving the barring message within its paging cycle. It is noted that the base station is not overloaded when the steps **1003, 1005,** and **1007** are executed. Next, step **1009** is executed by the processor of the wireless end device for suspending the transceiving interface of the wireless end device from transmitting data to the base station for a barring time interval. It is noted that the barring time interval may be a predetermined one or may be recorded in the barring message.

In case that the special event continues, the transmission barring method repeats the aforementioned steps **1003, 1005, 1007,** and **1009** and the wireless end device will update the barring time interval accordingly.

In addition to the aforesaid steps, the ninth embodiment can execute all the operations set forth for the third embodiment. How the ninth embodiment executes these operations will be readily appreciated by those of ordinary skill in the art based on the explanation of the third embodiment and thus will not be further described therein.

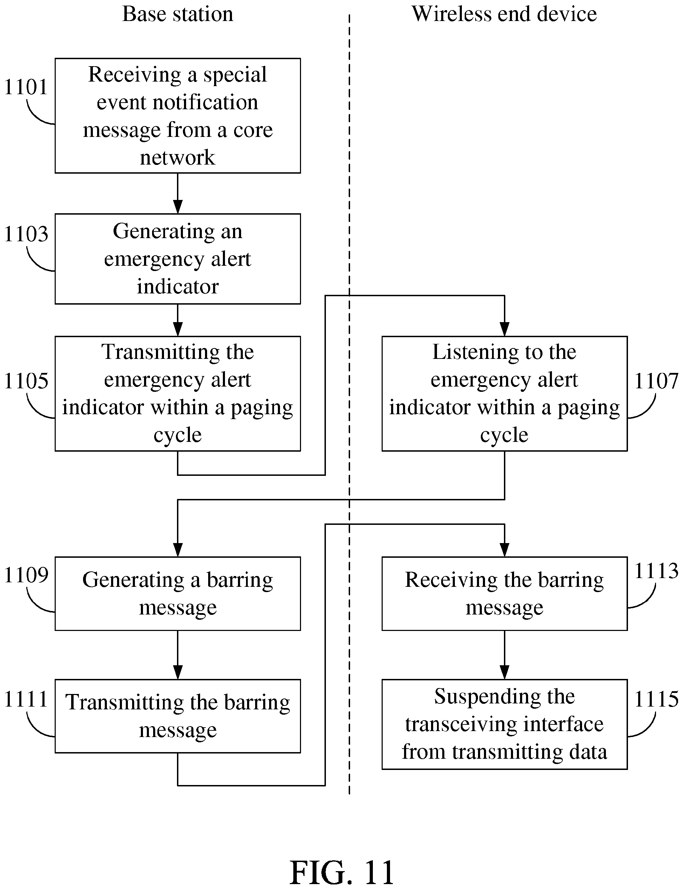

A tenth embodiment of the present invention is a transmission barring method, whose flowchart is illustrated in **FIG. 11****.** The transmission barring method can be used for a wireless communication network comprising a core network, a base station, a first wireless end device, and a second wireless end device. The second wireless end device has a higher priority for transmission, while the first wireless end device has a lower priority for transmission. The base station comprises a first transceiving interface, a processor, and a second transceiving interface, while the first wireless end device comprises a processor and a transceiving interface.

When a special event happens or is going to happen, the core network transmits a special event notification message. Afterwards, step **1101** is executed by the first transceiving interface of the base station for receiving the special event notification message from the core network. Next, step **1103** is executed by the processor of the base station for generating an emergency alert indicator. Following that, step **1105** is executed by the second transceiving interface of the base station for transmitting the emergency alert indicator to the second wireless end device within a paging cycle of the second wireless end device.

Next, step **1107** is executed by the transceiving interface of the first wireless end device for listening to the emergency alert indicator within a paging cycle of the first wireless end device. This is feasible because the paging cycle of the first wireless end device overlaps that of the second wireless end device. By listening to the emergency alert indicator, the first wireless end device learns that it has to receive a barring message later.

Following that, step **1109** is executed by the processor of the base station for generating the barring message, which may comprise additional barring information, such as the barring time interval. Step **1111** is then executed by the second transceiving interface of the base station for transmitting the barring message to the first wireless end device. Next, step **1113** is executed by the transceiving interface of the first wireless end device for receiving the barring message. It is emphasized that the base station is not overloaded when the steps **1109, 1111,** and **1113** are executed. Afterwards, the first wireless end device derives the barring time interval and its processor executes step **1113** for suspending its transceiving interface from transmitting data to the base station for the barring time interval.

In case that the special event continues, the transmission barring method repeats the aforementioned steps **1109, 1111, 1113,** and **1115** and the first wireless end device will update the barring time interval accordingly.

In addition to the aforesaid steps, the tenth embodiment can execute all the operations set forth for the fourth embodiment. How the tenth embodiment executes these operations will be readily appreciated by those of ordinary skill in the art based on the explanation of the fourth embodiment and thus will not be further described therein.

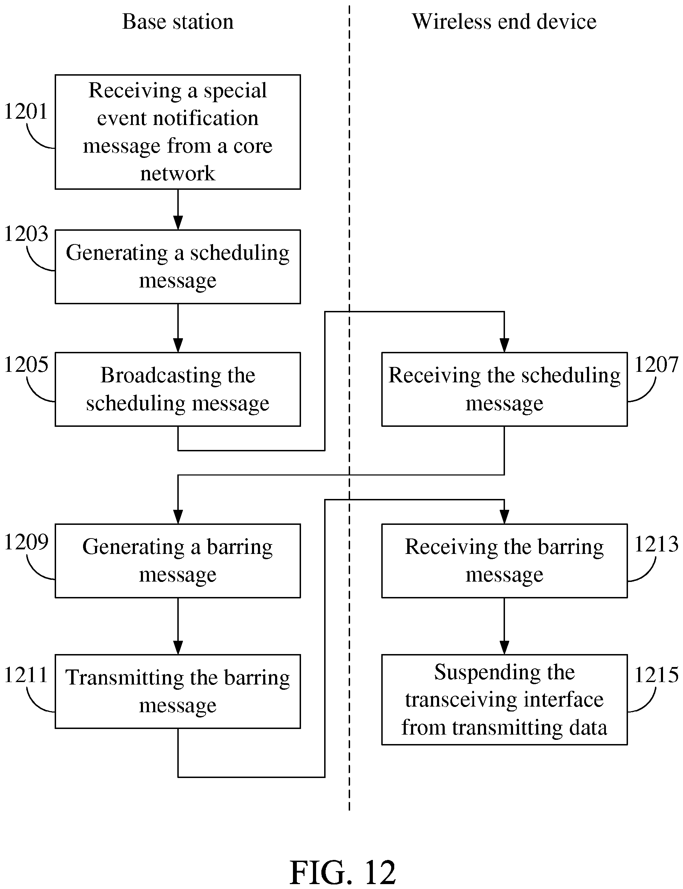

An eleventh embodiment of the present invention is a transmission barring method, whose flowchart is illustrated in **FIG. 12****.** The transmission barring method can be used for a wireless communication network comprising a core network, a base station, and a wireless end device. The wireless end device has a lower priority for transmission in the wireless communication network. For example, the wireless end device may be a delay tolerant device. The base station comprises a first transceiving interface, a processor, and a second transceiving interface, while the wireless end device comprises a processor and a transceiving interface.

When a special event happens or is going to happen in a short time, the core network transmits a special event notification message. Afterwards, step **1201** is executed by the first transceiving interface of the base station for receiving the special event notification message from the core network. Next, step **1203** is executed by the processor of the base station for generating a scheduling message of a plurality of system information blocks. Following that, step **1205** is executed by the second transceiving interface of the base station for broadcasting the scheduling message. Next, step **1207** is executed by the transceiving interface of the wireless end device to receive the scheduling message. From the scheduling message, the wireless end device learns the time to receive a barring message.

Following that, step **1209** is executed by the processor of the base station for generating a barring message, which comprises additional barring information, such as the barring time interval. Step **1211** is then executed by the second transceiving interface of the base station for transmitting the barring message to the wireless end device. Next, step **1213** is executed by the transceiving interface of the wireless end device for receiving the barring message. It is noted that the base station is not overloaded when the steps **1209, 1211,** and **1213** are executed. Afterwards, the wireless end device derives the barring time interval and its processor executes step **1215** for suspending its transceiving interface from transmitting data to the base station for the barring time interval.

In case that the special event continues, the transmission barring method repeats the aforementioned step **1205** to step **1215** and the wireless end device will update the barring time interval accordingly.

In addition to the aforesaid steps, the eleventh embodiment can execute all the operations set forth for the fifth embodiment. How the eleventh embodiment executes these operations will be readily appreciated by those of ordinary skill in the art based on the explanation of the fifth embodiment and thus will not be further described therein.

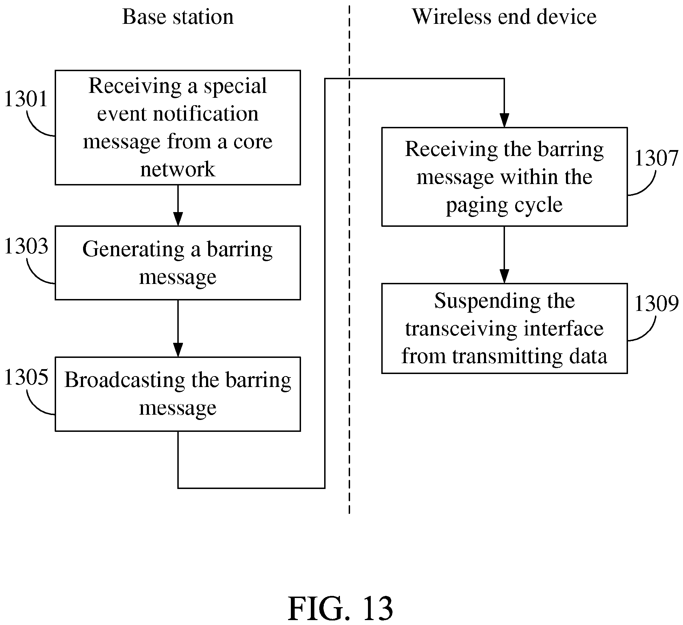

A twelfth embodiment of the present invention is a transmission barring method, whose flowchart is illustrated in **FIG. 13****.** The transmission barring method can be used for a wireless communication network comprising a core network, a base station, and a wireless end device. The wireless end device has a lower priority for transmission in the wireless communication network. For example, the wireless end device may be a delay tolerant device. The base station comprises a first transceiving interface, a processor, and a second transceiving interface, while the wireless end device comprises a processor and a transceiving interface.

When a special event happens or is going to happen in a short time, the core network transmits a special event notification message. Afterwards, step **1301** is executed by the first transceiving interface of the base station for receiving the special event notification message from the core network. Then, step **1303** is executed by the processor of the base station for generating a barring message in one of a master information block and a system information block. Next, step **1305** is executed by the second transceiving interface of the base station for transmitting the barring message by broadcasting the master information block or the system information block (depending on which one comprises the barring message).

From the viewpoint of the wireless end device, step **1307** is executed by the transceiving interface of the wireless end device for receiving the barring message. It is noted that the base station is not overloaded when the steps **1303, 1305,** and **1307** are executed. Next, step **1309** is executed by the processor of the wireless end device for suspending the transceiving interface of the wireless end device from transmitting data to the base station for a barring time interval. It is noted that the barring time interval may be a predetermined one or may be recorded in the barring message.

In case that the special event continues, the transmission barring method repeats the aforementioned steps **1303, 1305, 1307,** and **1309** and the wireless end device will update the barring time interval accordingly.

In addition to the aforesaid steps, the twelfth embodiment can execute all the operations set forth for the sixth embodiment. How the twelfth embodiment executes these operations will be readily appreciated by those of ordinary skill in the art based on the explanation of the sixth embodiment and thus will not be further described therein.

According to the above embodiments, wireless end devices of a wireless communication network have different priorities for transmissions when a special event happens or is going to happen in a short time. For wireless end devices that have higher priority for transmission, their data transmissions and phone calls will not be suspended during the special event. On the contrary, for the wireless end devices that have lower priority for transmission, their data transmissions and phone calls will be suspended for the barring time interval. By the mechanisms provided by the present invention, the number of data flows toward a base station can be greatly reduced when the special event happens. As a result, the problems of overload, call drops, and intolerable transmission delays can be mitigated.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A base station (231, 233), comprising:
a first transceiving interface (231a), being configured to receive a special event notification message (210) from a core network (21), wherein a first wireless end device (253, 273) and a second wireless end device (251, 271) are in a coverage of the base station (231, 233), the first wireless end device (253, 273) has a first priority for transmission, the second wireless end device (251, 271) has a second priority for transmission, and the first priority for transmission is lower than the second priority for transmission;
a processor (231b), being electrically connected to the first transceiving interface (231a) and configured to generate an emergency alert indicator (232) and a barring message (230, 236) after the first transceiving interface (231a) receives the special event notification message (210); and
a second transceiving interface (231c), being electrically connected to the processor (231b) and configured to transmit the emergency alert indicator (232) to the second wireless end device (251, 271) to enable the second wireless end device (251, 271) into an active mode for receiving a piece of emergency related information (234), wherein the emergency alert indicator (232) is listened to by the first wireless end device (253, 273), and the first wireless end device (253, 273) will receive the barring message (230, 236) after having listened to the emergency alert indicator (232),
wherein the second transceiving interface (231c) is further configured to transmit the barring message (230, 236) to the first wireless end device (253, 273) to suspend the first wireless end device (253, 273) from transmitting data to the base station (231, 233) for a barring time interval,
wherein the base station (231, 233) is not overloaded when the barring message (230, 236) is generated and transmitted.

2. The base station (231, 233) of Claim 1, wherein the second transceiving interface (231c) transmits the barring message (230, 236) to the first wireless end device (253, 273) within a paging cycle (34, 36) of the first wireless end device (253, 273).

3. The base station (231, 233) of any of Claims 1 to 2, wherein the emergency alert indicator (232) is transmitted to the second wireless end device (251, 271) within a paging cycle (32) of the second wireless end device (251, 271), and the emergency alert indicator (232) is transmitted prior to the barring message (230, 236).

4. The base station (231, 233) of any of Claims 1 to 3, wherein the processor (231b) further generates a scheduling message (602) of a plurality of system information blocks, the second transceiving interface (231c) further broadcasts the scheduling message (602) before transmitting the barring message (230, 236), and the barring message (230, 236) is transmitted in at least one of the system information blocks.

5. The base station (231, 233) of any of Claims 1 to 4, wherein the barring message (230, 236) is recorded in one of a master information block and a system information block, and the second transceiving interface (231c) transmits the barring message (230, 236) by broadcasting.

6. A wireless end device (253, 273), being in a coverage of a base station (231, 233) and having a first priority for transmission lower than a second priority for transmission, the wireless end device (253, 273) comprising:
a transceiving interface (253a), being configured to listen to an emergency alert indicator (232), wherein the emergency alert indicator (232) is transmitted from the base station (231, 233) to another wireless end device (251, 271) having the second priority for transmission, the transceiving interface (253a) being configured to further receive a barring message (230, 236) from the base station (231, 233), wherein the base station (231, 233) is not overloaded when the barring message (230, 236) is received by the wireless end device (253, 273); and
a processor (253b), being electrically connected to the transceiving interface (253a) and configured to suspend the transceiving interface (253a) from transmitting data to the base station (231, 233) for a barring time interval.

7. The wireless end device (253, 273) of Claim 6, wherein the transceiving interface (253a) receives the barring message (230, 236) within a paging cycle (34, 36).

8. The wireless end device (253, 273) of any of Claims 6 to 7, wherein the emergency alert indicator (232) is listened to by the transceiving interface (253a) within a paging cycle (34) and the processor (253b) further enables the transceiving interface (253a) into an active mode for receiving the barring message (230, 236).

9. The wireless end device (253, 273) of any of Claims 6 to 8, wherein the transceiving interface (253a) further receives a scheduling message (602) of a plurality of system information blocks and the barring message (230, 236) is received by the transceiving interface (253a) in at least one of the system information blocks.

10. The wireless end device (253, 273) of any of Claims 6 to 9, wherein the barring message (230, 236) is recorded in one of a master information block and a system information block.

11. A transmission barring method for use by a base station (231, 233), the base station (231, 233) comprising a first transceiving interface (231a), a second transceiving interface (231c), and a processor (231b), a first wireless end device (253, 273) and a second wireless end device (251, 271) being in a coverage of the base station (231, 233), the first wireless end device (253, 273) having a first priority for transmission, the second wireless end device (251, 271) having a second priority for transmission, the first priority for transmission being lower than the second priority for transmission, and the transmission barring method comprising the following steps of:
receiving, by the first transceiving interface (231a), a special event notification message (210) from a core network (21);
generating, by the processor (231b), an emergency alert indicator (232) after receiving the special event notification message (210);
transmitting, by the second transceiving interface (231c), the emergency alert indicator (232) to the second wireless end device (251, 271) to enable the second wireless end device (251, 271) into an active mode for receiving a piece of emergency related information (234), wherein the emergency alert indicator (232) is listened to by the first wireless end device (253, 273), and the first wireless end device (253, 273) will receive a barring message (230, 236) after having listened to the emergency alert indicator (232);
generating, by the processor (231b), the barring message (230, 236) after receiving the special event notification message (210); and
transmitting, by the second transceiving interface (231c), the barring message to the first wireless end device (253, 273) to suspend the first wireless end device (253, 273) from transmitting data to the base station (231, 233) for a barring time interval,
wherein the base station (231, 233) is not overloaded when the barring message (230, 236) is generated and transmitted.

12. The transmission barring method of Claim 11, wherein the barring message (230, 236) is transmitted to the first wireless end device (253, 273) within a paging cycle (34, 36) of the first wireless end device (253, 273).

13. The transmission barring method of any of Claims 11 to 12, wherein the emergency alert indicator (232) is transmitted to the second wireless end device (251, 271) within a paging cycle (32) of the second wireless end device (251, 271) and the emergency alert indicator (232) is transmitted prior to the barring message (230, 236).

14. The transmission barring method of any of Claims 11 to 13, further comprising the following steps of:
generating, by the processor (231b), a scheduling message (602) of a plurality of system information blocks; and
broadcasting, by the second transceiving interface (231c), the scheduling message (602) before transmitting the barring message (230, 236);
wherein the barring message (230, 236) is transmitted in at least one of the system information blocks.

15. The transmission barring method of any of Claims 11 to 14, wherein the barring message (230, 236) is recorded in one of a master information block and a system information block and the second transceiving interface (231c) transmits the barring message (230, 236) by broadcasting.

16. A transmission barring method for use by a wireless end device (253, 273), the wireless end device (253, 273) comprising a transceiving interface (253a) and a processor (253b), the wireless end device (253, 273) being in a coverage of a base station (231, 233) and having a first priority for transmission lower than a second priority for transmission, and the transmission barring method comprising the following steps of:
listening to, by the transceiving interface (253a), an emergency alert indicator (232), wherein the emergency alert indicator (232) is transmitted from the base station (231, 233) to another wireless end device (251, 271) having the second priority for transmission;
receiving, by the transceiving interface (253a), a barring message (230, 236) from the base station (231, 233) after having listened to the emergency alert indicator (232); and
suspending, by the processor (253b), the transceiving interface (253a) from transmitting data to the base station (231, 233) for a barring time interval, wherein the base station (231, 233) is not overloaded when the barring message (230, 236) is received by the wireless end device (253, 273).

17. The transmission barring method of Claim 16, wherein the barring message (230, 236) is received within a paging cycle (34, 36).

18. The transmission barring method of any of Claims 16 to 17, wherein the emergency alert indicator (232) is listened to within a paging cycle (34) and the transmission barring method further comprises the step of:
enabling, by the processor (253b), the transceiving interface (253a) into an active mode for receiving the barring message (230, 236).

19. The transmission barring method of any of Claims 16 to 18, further comprising the following steps of:
receiving, by the transceiving interface (253a), a scheduling message (602) of a plurality of system information blocks;
wherein the barring message (230, 236) is in at least one of the system information blocks.

20. The transmission barring method of any of Claims 16 to 19, wherein the barring message (230, 236) is recorded in one of a master information block and a system information block.

## Patentansprüche

1. Basisstation (231, 233) mit:
einer ersten Sende-/Empfangsschnittstelle (231a), die dafür konfiguriert ist, eine Benachrichtigung (210) über ein besonderes Ereignis von einem Kernnetz (21) zu empfangen, wobei ein erstes Drahtlosendgerät (253, 273) und ein zweites Drahtlosendgerät (251, 271) sich im Abdeckungsbereich der Basisstation (231, 233) befinden, wobei das erste Drahtlosendgerät (253, 273) eine erste Übertragungspriorität hat, das zweite Drahtlosendgerät (251, 271) eine zweite Übertragungspriorität hat, und wobei die erste Übertragungspriorität niedriger ist als die zweite Übertragungspriorität;
einem Prozessor (231b), der mit der ersten Sende-/Empfangsschnittstelle (231a) elektrisch verbunden und dafür konfiguriert ist, eine Alarmanzeige (232) und eine Sperrnachricht (230, 236) zu erzeugen, nachdem die erste Sende-/Empfangsschnittstelle (23a) die Benachrichtigung (210) über ein besonderes Ereignis empfangen hat; und
einer zweiten Sende-/Empfangsschnittstelle (231c), die mit dem Prozessor (231b) elektrisch verbunden und dafür konfiguriert ist, die Alarmanzeige (232) an das zweite Drahtlosendgerät (251, 271) zu übertragen, um das zweite Drahtlosendgerät (251, 271) in einen aktiven Modus zum Empfangen eines mit einem Notfall in Beziehung stehenden Informationselements zu schalten, wobei das erste Drahtlosendgerät (253, 273) die Alarmanzeige (232) mithört und das erste Drahtlosendgerät (253, 273) die Sperrnachricht (230, 236) empfangen wird, nachdem es die Alarmanzeige (232) mitgehört hat,
wobei die zweite Sende-/Empfangsschnittstelle (231c) ferner dafür konfiguriert ist, die Sperrnachricht (230, 236) an das erste Drahtlosendgerät (253, 273) zu übertragen, um die Datenübertragung vom ersten Drahtlosendgerät (253, 273) an die Basisstation (231, 233) für ein Sperrzeitintervall zu unterbrechen,
wobei die Basisstation (231, 233) nicht überlastet wird, wenn die Sperrnachricht (230, 236) erzeugt und übertragen wird.

2. Basisstation (231, 233) nach Anspruch 1, wobei die zweite Sende-/Empfangsschnittstelle (231c) die Sperrnachricht (230, 236) innerhalb eines Paging-Zyklus (34, 36) des ersten Drahtlosendgeräts (253, 273) an das erste Drahtlosendgerät (253, 273) überträgt.

3. Basisstation (231, 233) nach Anspruch 1 oder 2, wobei die Alarmanzeige (232) innerhalb eines Paging-Zyklus des zweiten Drahtlosendgeräts (251, 271) an das zweite Drahtlosendgerät (251, 271) übertragen wird, und wobei die Alarmanzeige (232) vor der Sperrnachricht (230, 236) übertragen wird.

4. Basisstation (231, 233) nach einem der Ansprüche 1 bis 3, wobei der Prozessor (231b) ferner eine Scheduling-Nachricht (602) mehrerer Systeminformationsblöcke erzeugt, die zweite Sende-/Empfangsschnittstelle (231c) ferner die Scheduling-Nachricht (602) durch Rundsenden überträgt, bevor die Sperrnachricht (230, 236) übertragen wird, und die Sperrnachricht (230, 236) in mindestens einem der Systeminformationsblöcke übertragen wird.

5. Basisstation (231, 233) nach einem der Ansprüche 1 bis 4, wobei die Sperrnachricht (230, 236) in einem Master-Informationsblock oder in einem Systeminformationsblock aufgezeichnet wird und die zweite Sende-/Empfangsschnittstelle (231c) die Sperrnachricht (230, 236) durch Rundsenden überträgt.

6. Drahtlosendgerät (253, 273), das sich in einem Abdeckungsbereich einer Basisstation (231, 233) befindet und eine erste Übertragungspriorität hat, die niedriger ist als eine zweite Übertragungspriorität, wobei das Drahtlosendgerät (253, 273) aufweist:
eine Sende-/Empfangsschnittstelle (253a), die dafür konfiguriert ist, eine Alarmanzeige (232) mitzuhören, wobei die Alarmanzeige (232) von der Basisstation (231, 233) an ein anderes Drahtlosendgerät (251, 271) übertragen wird, das die zweite Übertragungspriorität hat, wobei die Sende-/Empfangsschnittstelle (253a) dafür konfiguriert ist, ferner eine Sperrnachricht (230, 236) von der Basisstation (231, 233) zu empfangen, wobei die Basisstation (231, 233) nicht überlastet wird, wenn die Sperrnachricht (230, 236) durch das Drahtlosendgerät (253, 273) empfangen wird; und
einen Prozessor (253b), der mit der Sende-/Empfangsschnittstelle (253a) elektrisch verbunden und dafür konfiguriert ist, die Datenübertragung von der Sende-/Empfangsschnittstelle (253a) zur Basisstation (231, 233) für ein Sperrzeitintervall zu unterbrechen.

7. Drahtlosendgerät (253, 273) nach Anspruch 6, wobei die Sende-/Empfangsschnittstelle (253a) die Sperrnachricht (230, 236) innerhalb eines Paging-Zyklus (34, 36) empfängt.

8. Drahtlosendgerät (253, 273) nach Anspruch 6 oder 7, wobei die Sende-/Empfangsschnittstelle (253a) die Alarmanzeige (232) innerhalb eines Paging-Zyklus (34) mithört und der Prozessor (253b) ferner die Sende-/Empfangsschnittstelle (253a) in einen aktiven Modus zum Empfangen der Sperrnachricht (230, 236) schaltet.

9. Drahtlosendgerät (253, 273) nach einem der Ansprüche 6 bis 8, wobei die Sende-/Empfangsschnittstelle (253a) ferner eine Scheduling-Nachricht (602) mehrerer Systeminformationsblöcke empfängt und die Sperrnachricht (230, 236) durch die Sende-/Empfangsschnittstelle (253a) in mindestens einem der Systeminformationsblöcke empfangen wird.

10. Drahtlosendgerät (253, 273) nach einem der Ansprüche 6 bis 9, wobei die Sperrnachricht (230, 236) in einem Masterinformationsblock oder in einem Systeminformationsblock aufgezeichnet wird.

11. Übertragungssperrverfahren zur Verwendung durch eine Basisstation (231, 233), wobei die Basisstation (231, 233) eine erste Sende-/Empfangsschnittstelle (231a), eine zweite Sende-/Empfangsschnittstelle (231c) und einen Prozessor (231b) aufweist, wobei ein erstes Drahtlosendgerät (253, 273) und ein zweites Drahtlosendgerät (251, 271) sich in einem Abdeckungsbereich der Basisstation (231, 233) befinden, wobei das erste Drahtlosendgerät (253, 273) eine erste Übertragungspriorität aufweist und das zweite Drahtlosendgerät (251, 271) eine zweite Übertragungspriorität aufweist, wobei die erste Übertragungspriorität niedriger ist als die zweite Übertragungspriorität, und wobei das Übertragungssperrverfahren die folgenden Schritte aufweist:
Empfangen einer Benachrichtigung (210) über ein besonderes Ereignis von einem Kernnetz (21) durch die erste Sende-/Empfangsschnittstelle (231a);
Erzeugen einer Alarmanzeige (232) durch den Prozessor (231b) nach dem Empfang der Benachrichtigung (210) über ein besonderes Ereignis;
Übertragen der Alarmanzeige (232) durch die zweite Sende-/Empfangsschnittstelle (231c) an das zweite Drahtlosendgerät (251, 271), um das zweite Drahtlosendgerät (251, 271) in einen aktiven Modus zum Empfangen eines mit einem Notfall in Beziehung stehenden Informationselements (234) zu schalten, wobei das erste Drahtlosendgerät (253, 273) die Alarmanzeige (232) mithört, und wobei das erste Drahtlosendgerät (253, 273) eine Sperrnachricht (230, 236) empfangen wird, nachdem es die Alarmanzeige (232) mitgehört hat;
Erzeugen der Sperrnachricht (230, 236) nach dem Empfang der Benachrichtigung (210) über ein besonderes Ereignis durch den Prozessor (231b); und
Übertragen der Sperrnachricht durch die zweite Sende-/Empfangsschnittstelle (231c) an das erste Drahtlosendgerät (253, 273) zum Unterbrechen der Datenübertragung vom ersten Drahtlosendgerät (253, 273) an die Basisstation (231, 233) für ein Sperrzeitintervall,
wobei die Basisstation (231, 233) nicht überlastet wird, wenn die Sperrnachricht (230, 236) erzeugt und übertragen wird.

12. Übertragungssperrverfahren nach Anspruch 11, wobei die Sperrnachricht (230, 236) innerhalb eines Paging-Zyklus (34, 36) des ersten Drahtlosendgeräts (253, 273) an das erste Drahtlosendgerät (253, 273) übertragen wird.

13. Übertragungssperrverfahren nach Anspruch 11 oder 12, wobei die Alarmanzeige (232) innerhalb eines Paging-Zyklus (32) des zweiten Drahtlosendgeräts (251, 271) an das zweite Drahtlosendgerät (251, 271) übertragen wird, und wobei die Alarmanzeige (232) vor der Sperrnachricht (230, 236) übertragen wird.

14. Übertragungssperrverfahren nach einem der Ansprüche 11 bis 13, ferner mit den folgenden Schritten:
Erzeugen einer Scheduling-Nachricht (602) mehrerer Systeminformationsblöcke durch den Prozessor (231b); und
Übertragen der Scheduling-Nachricht (602) durch Rundsenden durch die zweite Sende-/Empfangsschnittstelle (231c) vor dem Übertragen der Sperrnachricht (230, 236);
wobei die Sperrnachricht (230, 236) in mindestens einem der Systeminformationsblöcke übertragen wird.

15. Übertragungssperrverfahren nach einem der Ansprüche 11 bis 14, wobei die Sperrnachricht (230, 236) in einem Master-Informationsblock oder in einem Systeminformationsblock aufgezeichnet ist, und wobei die zweite Sende-/Empfangsschnittstelle (231c) die Sperrnachricht (230, 236) durch Rundsenden überträgt.

16. Übertragungssperrverfahren zur Verwendung durch ein Drahtlosendgerät (253, 273), wobei das Drahtlosendgerät (253, 273) eine Sende-/Empfangsschnittstelle (253a) und einen Prozessor (253b) aufweist, wobei das erste Drahtlosendgerät (253, 273) sich in einem Abdeckungsbereich einer Basisstation (231, 233) befindet und eine erste Übertragungspriorität hat, die niedriger ist als eine zweite Übertragungspriorität, und wobei das Übertragungssperrverfahren die folgenden Schritte aufweist:
Mithören einer Alarmanzeige (232) durch die Sende-/Empfangsschnittstelle (253a), wobei die Alarmanzeige (232) von der Basisstation (231, 233) an ein anderes Drahtlosendgerät (251, 271) mit der zweiten Übertragungspriorität übertragen wird;
Empfangen einer Sperrnachricht (230, 236) von der Basisstation (231m 233) durch die Sende-/Empfangsschnittstelle (253a), nachdem sie die Alarmanzeige (232) mitgehört hat; und
Unterbrechen der Datenübertragung von der Transceiver-Schnittstelle (253a) zur Basisstation (231, 233) für ein Sperrzeitintervall durch den Prozessor (253b), wobei die Basisstation (231, 233) nicht überlastet wird, wenn die Sperrnachricht (230, 236) durch das Drahtlosendgerät (253, 273) empfangen wird.

17. Übertragungssperrverfahren nach Anspruch 16, wobei die Sperrnachricht (230, 236) innerhalb eines Paging-Zyklus (34, 36) empfangen wird.

18. Übertragungssperrverfahren nach Anspruch 16 oder 17, wobei die Alarmmeldung (232) innerhalb eines Paging-Zyklus (34) mitgehört wird und das Übertragungssperrverfahren ferner den Schritt aufweist:
Schalten der Sende-/Empfangsschnittstelle (253a) durch den Prozessor (253b) in einen aktiven Modus zum Empfangen der Sperrnachricht (230, 236).

19. Übertragungssperrverfahren nach einem der Ansprüche 16 bis 18, ferner mit dem Schritt:
Empfangen einer Scheduling-Nachricht (602) mehrerer Systeminformationsblöcke durch die Sende-/Empfangsschnittstelle (253a);
wobei die Sperrnachricht (230, 236) in mindestens einem der Systeminformationsblöcke aufgezeichnet ist.

20. Übertragungssperrverfahren nach einem der Ansprüche 16 bis 19, wobei die Sperrnachricht (230, 236) in einem Master-Infonationsblock oder in einem Systeminformationsblock aufgezeichnet ist.

## Revendications

1. Station de base (231, 233) comprenant :
une première interface émettrice réceptrice (231a) étant configurée pour recevoir un message de notification d'un évènement spécial (210) provenant d'un réseau central (21), où un premier dispositif d'extrémité sans fil (253, 273) et un deuxième dispositif d'extrémité sans fil (251, 271) sont dans une couverture de la station de base (231, 233), le premier dispositif d'extrémité sans fil (253, 273) a une première priorité pour la transmission, le deuxième dispositif d'extrémité sans fil (251, 271) a une deuxième priorité pour la transmission, et la première priorité pour la transmission est plus faible que la deuxième priorité pour la transmission ;
un processeur (231b) étant connecté électriquement à la première interface émettrice réceptrice (213a) et configuré pour générer un indicateur d'alerte d'urgence (232) et un message d'interdiction (230, 236) après que la première interface émettrice réceptrice (231a) ait reçu le message de notification d'évènement spécial (210) ; et
une deuxième interface émettrice réceptrice (231c) étant connectée électriquement au processeur (231b) et configurée pour transmettre l'indicateur d'alerte d'urgence (232) au deuxième dispositif d'extrémité sans fil (251, 271) pour placer le deuxième dispositif d'extrémité sans fil (251, 271) dans un mode actif pour recevoir un élément de renseignement concernant l'urgence (234), où l'indicateur d'alerte d'urgence (232) est sondé par le premier dispositif d'extrémité sans fil (253, 273), et le premier dispositif d'extrémité sans fil (253, 273) recevra le message d'interdiction (230, 236) après avoir sondé l'indicateur d'alerte d'urgence ((232),
où la deuxième interface émettrice réceptrice (231c) est en outre configurée pour transmettre le message d'interdiction (230, 236) vers le premier dispositif d'extrémité sans fil (253, 273) pour suspendre le premier dispositif d'extrémité sans fil (253, 273) de la transmission de données vers la station de base (231, 233) pendant un intervalle de temps d'interdiction,
où la station de base (231, 233) n'est pas surchargée lorsque le message d'interdiction (230, 236) est généré et transmis.

2. Station de base (231, 233) selon la revendication 1, dans laquelle la deuxième interface émettrice réceptrice (231c) transmet le message d'interdiction (230, 236) au premier dispositif d'extrémité sans fil (253, 273) dans le cadre d'un cycle de radiomessagerie (34, 36) du premier dispositif d'extrémité sans fil (253, 273).

3. Station de base (231, 233) selon l'une quelconque des revendications 1 à 2, dans laquelle l'indicateur d'alerte d'urgence (232) est transmis au deuxième dispositif d'extrémité sans fil (251, 271) dans le cadre d'un cycle de radiomessagerie (32) du deuxième dispositif d'extrémité sans fil (251, 271) et l'indicateur d'alerte d'urgence (232) est transmis avant le message d'interdiction (230, 236).

4. Station de base (231, 233) selon l'une quelconque des revendications 1 à 3, dans laquelle le processeur (231b) génère en outre un message de planification (602) d'une pluralité de blocs d'information système, la deuxième interface émettrice réceptrice (213c) continue la diffusion du message de planification (602) avant la transmission du message d'interdiction (230, 236) et le message d'interdiction (230, 236) est transmis en au moins un bloc parmi les blocs d'information système.

5. Station de base (231, 233) selon l'une quelconque des revendications 1 à 4, dans laquelle le message d'interdiction (230, 236) est enregistré dans un bloc parmi un bloc d'information maître et un bloc d'information système, et la deuxième interface émettrice réceptrice (231c) transmet le message d'interdiction (230, 236) par radiodiffusion.

6. Dispositif d'extrémité sans fil (253, 273) étant sous la couverture d'une station de base (213, 233) et ayant une première priorité pour la transmission plus faible qu'une deuxième priorité pour la transmission, le dispositif d'extrémité sans fil (253, 273) comprenant :
une interface émettrice réceptrice (253a) étant configurée pour sonder un indicateur d'alerte d'urgence (232), où l'indicateur d'alerte d'urgence (232) est transmis à partir de la station de base (231, 233) vers un autre dispositif d'extrémité sans fil (215, 271) ayant la deuxième priorité pour la transmission, l'interface émettrice réceptrice (253a) étant en outre configurée pour recevoir un message d'interdiction (230, 236) à partir de la station de base (231, 233), où la station de base (231, 233) n'est pas surchargée lorsque le message d'interdiction (230, 236) est reçu par le dispositif d'extrémité sans fil (253, 273) ; et
un processeur (253b) étant connecté électriquement à l'interface émettrice réceptrice (253a) et configuré pour suspendre l'interface émettrice réceptrice (253a) de la transmission de données vers la station de base (231, 233) pendant un intervalle de temps d'interdiction.

7. Dispositif d'extrémité sans fil (253, 273) selon la revendication 6, dans lequel l'interface émettrice réceptrice (253a) reçoit le message d'interdiction (230, 236) dans le cadre d'un cycle de radiomessagerie (34, 36).

8. Dispositif d'extrémité sans fil (253, 273) selon l'une quelconque des revendications 6 à 7, dans lequel l'indicateur d'alerte d'urgence (232) est sondé par l'interface émettrice réceptrice (253a) dans le cadre d'un cycle de radiomessagerie (34) et le processeur place en outre l'interface émettrice réceptrice (253a) dans un mode actif pour la réception du message d'interdiction (230, 236).

9. Dispositif d'extrémité sans fil (253, 273) selon l'une quelconque des revendications 6 à 7, dans lequel l'interface émettrice réceptrice (253a) reçoit en outre un message de planification (602) d'une pluralité de blocs d'information système et le message d'interdiction (230, 236) est reçu par l'interface émettrice réceptrice (253a) en au moins un bloc parmi les blocs d'information système.

10. Dispositif d'extrémité sans fil (253, 273) selon l'une quelconque des revendications 6 à 9, dans lequel le message d'interdiction (230, 236) est enregistré dans un bloc parmi un bloc d'information maître et un bloc d'information système.

11. Procédé d'interdiction de transmission pour une utilisation par une station de base (231, 233), la station de base (231, 233) comprenant une première interface émettrice réceptrice (231a), une deuxième interface émettrice réceptrice (231c) et un processeur (231b), un premier dispositif d'extrémité sans fil (253, 273) et un deuxième dispositif d'extrémité sans fil (251, 271) étant sous la couverture de la station de base (231, 233), le premier dispositif d'extrémité sans fil (253, 273) ayant une première priorité pour la transmission, le deuxième dispositif d'extrémité sans fil (251, 271) ayant une deuxième priorité pour la transmission, la première priorité de transmission étant plus faible que la deuxième priorité de transmission, et le procédé d'interdiction de transmission comprenant les étapes suivantes :
réception, par la première interface émettrice réceptrice (231a), d'un message de notification d'évènement spécial (210) à partir d'un réseau central (21) ;
génération, par le processeur (231b), d'un indicateur d'alerte d'urgence (232) après la réception du message de notification d'évènement spécial (210) ;
transmission, par la deuxième interface émettrice réceptrice (231c), de l'indicateur d'alerte d'urgence (232) vers le deuxième dispositif d'extrémité sans fil (251, 271) pour placer le deuxième dispositif d'extrémité sans fil (251, 271) dans un mode actif pour la réception d'un élément de renseignement concernant l'urgence (234), où l'indicateur d'alerte d'urgence (232) est sondé par le premier dispositif d'extrémité sans fil (253, 273), et le premier dispositif d'extrémité sans fil (253, 273) recevra un message d'interdiction (230, 236) après avoir sondé l'indicateur d'alerte d'urgence (232) ;
génération, par le processeur (231b), du message d'interdiction (230, 236) après la réception du message de notification d'évènement spécial (210) ; et
transmission, par la deuxième interface émettrice réceptrice (231c), du message d'interdiction vers le premier dispositif d'extrémité sans fil (253, 273) pour suspendre le premier dispositif d'extrémité sans fil (253, 273) de la transmission de données vers la station de base (231, 233) pendant un intervalle de temps d'interdiction,
où la station de base (231, 233) n'est pas surchargée lorsque le message d'interdiction (230, 236) est généré et transmis.

12. Procédé d'interdiction de transmission selon la revendication 11, dans lequel le message d'interdiction (230, 236) est transmis au premier dispositif d'extrémité sans fil (253, 273) dans le cadre d'un cycle de radiomessagerie (34, 36) du premier dispositif d'extrémité sans fil (253, 273).

13. Procédé d'interdiction de transmission selon l'une quelconque des revendications 11 à 12, dans lequel l'indicateur d'alerte d'urgence (232) est transmis au deuxième dispositif d'extrémité sans fil (251, 271) dans le cadre d'un cycle de radiomessagerie (32) du deuxième dispositif d'extrémité sans fil (251, 271) et l'indicateur d'alerte d'urgence (232) est transmis avant le message d'interdiction (230, 236).

14. Procédé d'interdiction de transmission selon l'une quelconque des revendications 11 à 12, comprenant en outre les étapes suivantes :
génération, par le processeur (231b), d'un message de planification (602) d'une pluralité de blocs d'information système ; et
radiodiffusion, par la deuxième interface (231c), du message de planification (602) avant la transmission du message d'interdiction (230, 236) ;
où le message d'interdiction (230, 236) est transmis en au moins un parmi les blocs d'information système.

15. Procédé d'interdiction de transmission selon l'une quelconque des revendications 11 à 14, dans lequel le message d'interdiction (230, 236) est enregistré dans un bloc parmi un bloc d'information maître et un bloc d'information système et la deuxième interface émettrice réceptrice (231c) transmet le message d'interdiction (230, 236) par radiodiffusion.

16. Procédé d'interdiction de transmission pour une utilisation par un dispositif d'extrémité sans fil (253, 273), le dispositif d'extrémité sans fil (253, 273) comprenant une interface émettrice réceptrice (253a) et un processeur (253b), le dispositif d'extrémité sans fil (253, 273) étant sous la couverture d'une station de base (231, 233) et ayant une première priorité pour la transmission plus faible qu'une deuxième priorité pour la transmission, et le procédé d'interdiction de transmission comprenant les étapes suivantes :
sondage, par l'interface émettrice réceptrice (253a), d'un indicateur d'alerte d'urgence (232), où l'indicateur d'alerte d'urgence (232) est transmis à partir de la station de base (231, 233) vers un autre dispositif d'extrémité sans fil (251, 271) ayant la deuxième priorité pour la transmission ;
réception, par l'interface émettrice réceptrice (253a), d'un message d'interdiction (230, 236) à partir de la station de base (21, 233) après avoir sondé l'indicateur d'alerte d'urgence (232) ; et
suspension, par le processeur (253b), de l'interface émettrice réceptrice (253a) de la transmission de données vers la station de base (231, 233) pendant un intervalle de temps d'interdiction, où la station de base (231, 233) n'est pas surchargée lorsque le message d'interdiction (230, 236) est reçu par le dispositif d'extrémité sans fil (253, 273).

17. Procédé d'interdiction de transmission selon la revendication 16, dans lequel le message d'interdiction (230, 236) est reçu dans le cadre d'un cycle de radiomessagerie (34, 36).

18. Procédé d'interdiction de transmission selon l'une quelconque des revendications 16 à 17, dans lequel l'indicateur d'alerte d'urgence (232) est sondé dans le cadre d'un cycle de radiomessagerie (34) et le procédé d'interdiction de transmission comprend en outre l'étape :
de mise en place, par le processeur (253b), de l'interface émettrice réceptrice (253a) dans un mode actif pour la réception du message d'interdiction (230, 236).

19. Procédé d'interdiction de transmission selon l'une quelconque des revendications 16 à 18, comprenant en outre les étapes suivantes :
de réception, par l'interface émettrice réceptrice (253a), d'un message de planification (602) d'une pluralité de blocs d'information système ;
où le message d'interdiction (230, 236) est en au moins un bloc parmi les blocs d'information système.

20. Procédé d'interdiction de transmission selon l'une quelconque des revendications 16 à 19, dans lequel le message d'interdiction (230, 236) est enregistré dans un bloc parmi un bloc d'information maître et un bloc d'information système.
